# EUROPEAN PATENT APPLICATION

(11) **EP 4 836 234 A1**
(43) Date of publication of application: **04.11.2026**
(21) Application number: 24911941.3
(22) Date of filing: 18.10.2024
(51) Int. Cl.: H02J 50/12, H02J 1/00, H02J 7/00

(54) **POWER RECEPTION DEVICE**

(30) Priority: 27.12.2023 JP 2023220279
(71) Applicant: DENSO CORPORATION, Kariya-city, Aichi 448-8661 (JP)
(72) Inventor: TAKAHASHI Masaya, Kariya- city, Aichi 4488661 (JP); NAKAYASHIKI Yusei, Kariya- city, Aichi 4488661 (JP); YAMAGUCHI Nobuhisa, Kariya- city, Aichi 4488661 (JP)
(74) Representative: TBK
(86) International application number: PCT/JP2024/037192
(87) International publication number: WO 2025/142048

(57) **Abstract**

A power receiving apparatus (100) for receiving first AC power (AC1), comprises; a power receiving circuit (110); a power conversion circuit (120) configured to convert second AC power (AC2), which is a part of the first AC power, into first DC power (DC1); a load device (130) configured to consume the first DC power; a main power supply circuit (140) configured to supply second DC power (DC2); an auxiliary power supply circuit (160) configured to convert third AC power (AC3), which is another part of the first AC power, to supply third DC power (DC3); and a control circuit configured to receive power supply from the main power supply circuit or the auxiliary power supply circuit. The auxiliary power supply circuit is supplied with the third AC power via a first portion of the power receiving circuit. The first portion has small fluctuations in current and voltage caused by a short circuit of inputs of the power conversion circuit. The control circuit is configured to receive power supply from the auxiliary power supply circuit when power supply cannot be received from the main power supply circuit.

## Description

The present application claims the benefit of priority of Japanese Patent Application No. 2023-220279 filed on December 27, 2023, the disclosure of which is incorporated in its entirety herein by reference.

### Technical Field

This disclosure relates generally to a power receiving apparatus.

### Background Art

First Patent document, as listed below, discloses a power receiving device used in a wireless power feeding system for a vehicle and teaches a technique in which electric power for a controller of a power conversion circuit is supplied by a plurality of power sources. The power conversion circuit is implemented by a DC-DC converter arranged between a rectifier circuit installed on a power receiving side and a battery installed on an electric load side. Electric power for the controller of the DC-DC converter is supplied, at the start of power reception, from a power source connected to an output of the rectifier circuit and to an input of the DC-DC converter. In a steady state after the start of power reception, electric power for the controller of the DC-DC converter is supplied from a power source connected to the output of the DC-DC converter.

The output power from the output of the rectifier circuit varies depending on the magnitude of received power. However, the DC-DC converter outputs stable power after startup thereof. Therefore, the controller of the DC-DC converter is enabled to operate stably after the start of power reception even when the received power changes.

### [Prior Art Document]

### [Patent Document]

First Patent Document : Japanese Patent First Publication No. 2014-138496

### SUMMARY OF THE INVENTION

The inventors of this application have studied a power conversion circuit that performs rectification in a power receiving device of a wireless power feeding system for a vehicle. The power conversion circuit studied by the inventors includes switches that adjust output power. Electric power for the control unit of the switches is supplied from an auxiliary battery other than a battery serving as a load device of the wireless power feeding system. The inventors have considered application of the technique of the First Patent document as a power supply means to substitute for the auxiliary battery when the voltage of the auxiliary battery decreases due to an abnormality of the auxiliary battery.

However, in the power conversion circuit studied by the inventors, the output power varies. In other words, unlike in the First Patent document, it is impossible for the power conversion circuit to deliver stable power at all times. Therefore, even when the output power of the power conversion circuit varies, there has been a demand for a technique that substitutes for a power supply to the control unit of the power conversion circuit when an abnormality occurs in the power supply to the control unit.

This disclosure is capable of realizing the following aspects. According to one aspect of this disclosure, there is provided a power receiving apparatus that is configured to receive a first AC power in a wireless manner through a magnetic field. The power receiving apparatus comprises: (a) a power receiving circuit that includes a power receiving coil configured to receive the first AC power; (b) a power conversion circuit that works to convert a second AC power, which is a first part of the first AC power, into a first DC power; (c) a load device that consumes the first DC power; (d) a main power supply circuit that supplies a second DC power; (e) an auxiliary power supply circuit that works to convert a third AC power, which is a second part of the first AC power, into a third DC power and to output the third DC power; and (f) a control circuit that works to control an operation of the power receiving apparatus, the control circuit being supplied with electrical power from the main power supply circuit or the auxiliary power supply circuit. The power receiving circuit has outputs (110o) connected to inputs (120i) of the power conversion circuit. The power receiving circuit includes a first portion and a second portion. The first portion is a portion where variations in a current and a voltage are smaller in response to the inputs of the power conversion circuit being short-circuited. The second portion is a portion where variations in a current and a voltage are greater in response to the inputs of the power conversion circuit being short-circuited. The auxiliary power supply circuit is supplied with the third AC power through the first portion. The control circuit works to execute a combination of a short-circuit mode and a power supply mode. The short-circuit mode is a mode in which the inputs of the power conversion circuit are short-circuited. The power supply mode is a mode in which the inputs of the power conversion circuit are not short-circuited. The control circuit receives the electrical power from the auxiliary power supply circuit when it is impossible for the control circuit to receive the electrical power from the main power supply circuit.

With the above-described structure, the auxiliary power supply circuit supplies the third DC power to the control circuit by receiving the third AC power via the first portion. This enables the control circuit to continue control even in a case where power cannot be received from the main power supply circuit. Furthermore, since the first portion has small fluctuations in current and voltage even when the short-circuit mode is executed, the first portion can supply the third AC power. Note that the first portion is formed by a configuration related to power reception or a configuration of a filter. Therefore, the power receiving apparatus of the present disclosure is capable of operating the control circuit even in a case where the control circuit cannot receive power from the main power supply circuit.

### BRIEF DESCRIPTION OF THE DRAWINGS

The present disclosure will be understood more fully from the detailed description given hereinbelow and from the accompanying drawings of the preferred embodiments of the invention, which, however, should not be taken to limit the invention to the specific embodiments but are for the purpose of explanation and understanding only.

In the drawings:
Fig. 1 is an explanatory view showing a non-contact or wireless power supply system of a first embodiment;
Fig. 2 is an explanatory view showing an auxiliary power supply circuit;
Fig. 3 is an explanatory view showing an operation in a power supply mode of a power receiving device;
Fig. 4 is an explanatory view showing an operation in a short-circuit mode of the power receiving device;
Fig. 5 is an explanatory view showing an operation in a power supply mode of a power receiving device;
Fig. 6 is an explanatory view showing an operation in a short-circuit mode of a power receiving device;
Fig. 7 is a flowchart showing processing of a control circuit of a second embodiment;
Fig. 8 is an explanatory view showing a wireless power supply system of a third embodiment;
Fig. 9 is an explanatory view showing a wireless power supply system of a fourth embodiment;
Fig. 10 is an explanatory view showing a wireless power supply system of a fifth embodiment;
Fig. 11 is an explanatory view showing a wireless power supply system of a sixth embodiment;
Fig. 12 is an explanatory view showing an auxiliary power supply circuit of a seventh embodiment;
Fig. 13 is an explanatory view showing a power receiving device of an eighth embodiment;
Fig. 14 is an explanatory view showing a vehicle of a ninth embodiment;
Fig. 15 is an explanatory view showing a modified example of an immittance filter;
Fig. 16 is an explanatory view showing a modified example of a band-pass filter;
Fig. 17 is an explanatory view showing a modified example of a band-pass filter;
Fig. 18 is an explanatory view showing a modified example of a band-pass filter;
Fig. 19 is an explanatory view showing a modified example of an auxiliary power supply circuit; and
Fig. 20 is an explanatory view showing a modified example of an auxiliary power supply circuit.

### MODES FOR CARRYING OUT THE INVENTION

### A FIRST EMBODIMENT

### A-1 STRUCTURE OF APPARATUS

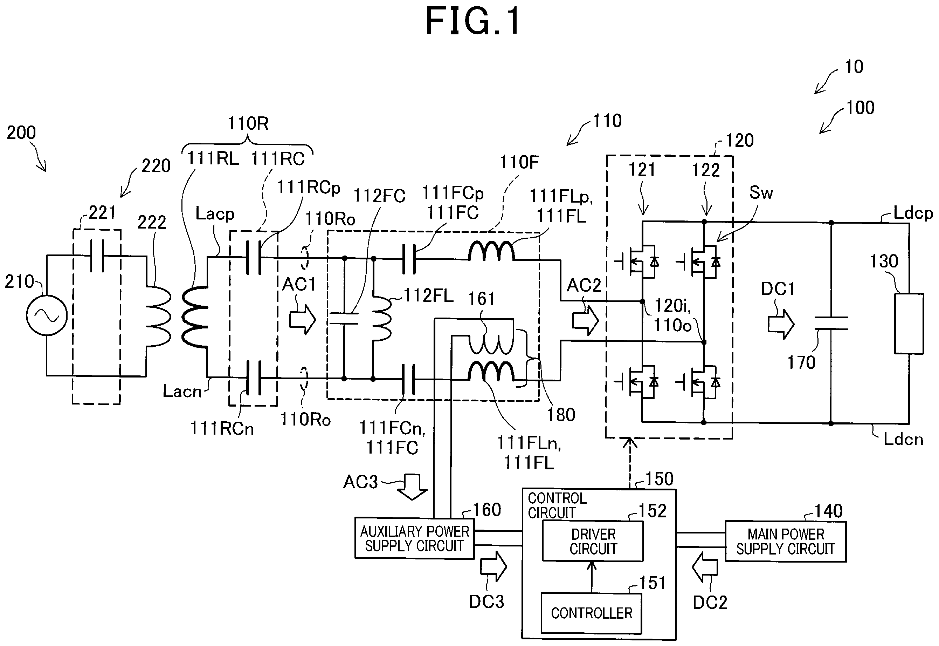

The wireless power feeding system 10 shown in Fig. 1 supplies electric power to the load device 130 in a non-contact or wireless manner using a magnetic field. The wireless power feeding system 10 includes the power transmission device 200 and the power receiving device 100. Specifically, the wireless power feeding system 10 supplies electric power from the power transmitting device 200 to the power receiving device 100 in a non-contact manner. The wireless power feeding system 10, for example, supplies electric power in a non-contact manner to the load device 130 mounted on the vehicle V.

The power transmission device 200 supplies AC power to the power receiving device 100 in a non-contact manner using a magnetic field. The power transmission device 200 includes an AC power supply device 210 and the power transmission resonant circuit 220.

The AC power supply device 210 works to supply AC power having a predetermined operating frequency to the power transmission resonant circuit 220. The AC power supply device 210 includes a power supply circuit and a power transmission circuit. The power supply circuit is, for example, an AC/DC converter circuit, and converts AC power supplied from a commercial power source into DC power. The power transmission circuit is an inverter that converts the DC power supplied from the power supply circuit into AC power having the operating frequency. The operating frequency is, for example, 85 kHz, and is set using a predetermined power transmission frequency defined by the Radio Law or the like. The operating frequency is also a frequency corresponding to a resonance frequency of the power transmission resonant circuit 220 described later.

The power transmission resonant circuit 220 transmits power to the power receiving circuit 110. The power transmission resonant circuit 220 includes the power transmission coil 222 and the power transmission resonant capacitor 221 connected in series with the power transmission coil 222. In other words, the power transmission resonant circuit 220 is a series resonant circuit.

The power transmission resonant capacitor 221 works to cause the power transmission resonant circuit 220 to resonate by AC power at the operating frequency of the AC power supply device 210 in a state where the power transmission coil 222 and the power receiving coil 111RL are magnetically coupled with each other. In other words, a capacitance of the power transmission resonant capacitor 221 is set such that the operating frequency of the AC power supply device 210 substantially matches a resonance frequency of the power transmission resonant circuit 220 in the state where the power transmission coil 222 and the power receiving coil 111RL are magnetically coupled.

The power transmission coil 222 generates a magnetic field corresponding to the operating frequency of the AC power supply device 210. Further, the power transmission coil 222 transmits AC power to the power receiving coil 111RL by being magnetically coupled with the power receiving coil 111RL. In other words, the power transmission coil 222 performs wireless power transmission by utilizing an electromagnetic induction phenomenon.

The power receiving device 100 receives AC power from the power transmission device 200 in a non-contact manner by a magnetic field. The power receiving device 100 includes the power receiving circuit 110, the power conversion circuit 120, the load device 130, the main power supply circuit 140, the auxiliary power supply circuit 160, the control circuit 150, the smoothing capacitor 170, and the first power supply transformer 180.

The power receiving circuit 110 includes the power receiving resonant circuit 110R and the filter circuit 110F.

The power receiving resonant circuit 110R includes the power receiving coil 111RL and the power receiving resonant capacitor 111RC connected in series with the power receiving coil 111RL. The power receiving resonant circuit 110R has a resonance frequency corresponding to a frequency of the AC power AC1. In other words, the power receiving resonant circuit 110R is a series resonant circuit. In the present disclosure, the power receiving resonant circuit may also be simply referred to as a resonant circuit.

The power receiving coil 111RL receives the first AC power AC1. The first AC power AC1 is AC power received by the power receiving coil 111RL. In Fig. 1, a direction in which the first AC power AC1 is supplied is indicated by an arrow AC1. The power receiving coil 111RL is magnetically coupled with the power transmission coil 222 by undergoing a magnetic field generated by the power transmission coil 222. This causes the power receiving coil 111RL to receive the first AC power AC1. The power receiving coil 111RL receives the magnetic field generated by the power transmission coil 222 in a state where the power receiving coil 111RL faces the power transmission coil 222. This enables the power receiving coil 111RL to wirelessly receive the first AC power AC1.

The power receiving resonant capacitor 111RC causes the power receiving resonant circuit 110R to resonate with the first AC power AC1 in a state where the power receiving coil 111RL and the power transmission coil 222 are magnetically coupled. In other words, a capacitance of the power receiving resonant capacitor 111RC is set such that, in a state where the power transmission coil 222 and the power receiving coil 111RL are magnetically coupled, a frequency of the first AC power AC1 and a resonance frequency of the power receiving resonant circuit 110R substantially coincide with each other.

The power receiving resonant capacitor 111RC includes the positive-side resonant capacitor 111RCp disposed on the positive-side line Lacp of the power receiving circuit 110, and the negative-side resonant capacitor 111RCn disposed on the negative-side line Lacn of the power receiving circuit 110. The power receiving resonant capacitor 111RC arranged on both the positive-side line Lacp and the negative-side line Lacn serves to suppress common-mode noise. In the present disclosure, the "power receiving resonant capacitor" is also simply referred to as a "resonant capacitor."

In a case where the power transmission resonant circuit 220 is configured as a series resonant circuit and the power receiving resonant circuit 110R is configured as a series resonant circuit, the output portion 110Ro of the power receiving resonant circuit 110R has a constant current characteristic. The filter circuit 110F is connected to the outputs 110Ro of the power receiving resonant circuit 110R. A constant current is, therefore, input to the filter circuit 110F.

The filter circuit 110F functions to suppress harmonic components of the first AC power AC1. The filter circuit 110F is connected between the outputs 110Ro of the power receiving resonant circuit 110R and the inputs 120i of the power conversion circuit 120. More specifically, the filter circuit 110F has a configuration in which two first coils 111FL and two first capacitors 111FC are connected in series between the power receiving coil 111RL and the inputs 120i of the power conversion circuit 120. In Fig. 1, the two first coils 111FL include the positive-side first coil 111FLp on the positive-side line Lacp and the negative-side first coil 111FLn on the negative-side line Lacn. The two first capacitors 111FC include the positive-side first capacitor 111FCp on the positive-side line Lacp and the negative-side first capacitor 111FCn on the negative-side line Lacn. Further, the filter circuit 110F includes a configuration in which the second capacitor 112FC and the second coil 112FL are connected in parallel to the power receiving resonant circuit 110R.

The above-described structure of the filter circuit 110F functions as a band-pass filter. When an input portion of the band-pass filter has a constant current characteristic, an output portion also has a constant current characteristic. Accordingly, a circuit portion connected in series to the inputs 120i of the power conversion circuit 120, which also serve as the outputs (i.e., output terminals) of the filter circuit 110F, has a constant current characteristic. In the following discussion, a "circuit portion connected in series to the inputs 120i of the power conversion circuit 120" will also be referred to as a "first circuit portion" or simply "first portion." In the first embodiment, the first portion includes the positive-side first coil 111FLp, the negative-side first coil 111FLn, the positive-side first capacitor 111FCp, the negative-side first capacitor 111FCn, the positive-side resonant capacitor 111RCp, the negative-side resonant capacitor 111RCn, and the power receiving coil 111RL. In Fig. 1, the first portion is illustrated thicker than other portions.

In this disclosure, a constant current characteristic means a property in which variations in current and voltage are small in a state where output portions of an electrical circuit are short-circuited. The property in which variations in current and voltage are small specifically means a property in which the current and the voltage do not reach 0 (i.e., 0A and 0V) in a state where the output portions of the circuit are short-circuited. In this disclosure, a circuit portion in which variations in current and voltage are small is the first portion. In other words, the first portion has a property in which the current and the voltage do not reach 0 (i.e., 0A and 0V) even when the inputs 120i of the power conversion circuit 120 are short-circuited.

In this disclosure, with respect to the first portion, a "circuit portion in which variations in current and voltage are large" will also be referred to as a "second circuit portion" or simply "second portion." The second portion is a circuit portion connected in parallel between the power transmission coil 222 and the input portion 120i of the power conversion circuit 120. In the first embodiment, the second portion includes the second capacitor 112FC and the second coil 112FL.

In the filter circuit 110F, the negative-side first coil 111FLn supplies the third AC power AC3 to the auxiliary power supply circuit 160. The third AC power AC3 is a part of the first AC power AC1. In Fig. 1, a direction in which the third AC power AC3 is supplied is indicated by the arrow AC3. The negative-side first coil 111FLn also serves as a primary side of the first power supply transformer 180 described later. The first power supply transformer 180 is constituted by the negative-side first coil 111FLn on the primary side and the first auxiliary power supply coil 161 on the secondary side. When the first AC power AC1 is supplied to the power receiving circuit 110, it causes an electromotive force to be generated in the negative-side first coil 111FLn. This causes a part of the first AC power AC1, i.e., the third AC power AC3, to be output from the first auxiliary power supply coil 161 via the negative-side first coil 111FLn. The third AC power AC3 is supplied to the auxiliary power supply circuit 160 to which the first auxiliary power supply coil 161 is connected.

The power conversion circuit 120 converts the second AC power AC2 into the first DC power DC1. The second AC power AC2 is a part of the first AC power AC1. More specifically, the second AC power AC2 is provided by the remainder after subtracting the third AC power AC3 from the first AC power AC1. In other words, the second AC power AC2 is a part (which will also be referred to below as a first part) of the first AC power AC1, and the third AC power AC3 is another part (which will also be referred to below as a second part different from the first part) of the first AC power AC1. In Fig. 1, a direction in which the second AC power AC2 is supplied is indicated by the arrow AC2.

The power conversion circuit 120 is a full-bridge circuit that uses four MOSFETs (i.e., Metal Oxide Semiconductor Field Effect Transistors) as switching devices. The power conversion circuit 120 includes two leg circuits, i.e., the first leg circuit 121 and the second leg circuit 122. Each switch Sw is driven in response to a voltage applied to a gate thereof according to a command from the control circuit 150. In the first embodiment, the "power conversion circuit" is also referred to as a "synchronous rectification circuit."

Each of the leg circuits has the two switches Sw connected in series with each other. Each of the leg circuits connects the positive line Ldcp and the negative line Ldcn for DC power. One of the outputs of the power receiving circuit 110 connects between the two switches Sw of one of the leg circuits, while the other output of the power receiving circuit 110 connects between the two switches Sw of the other leg circuit. In other words, a junction of the switches Sw of each of the leg circuits serves as the input 120i. The outputs of the power receiving circuit 110 are connected with the inputs 120i of the power conversion circuit 120.

The power conversion circuit 120 converts, as described above, the second AC power AC2, which is a part of the first AC power AC1, into the first DC power DC1. The conversion performed by the power conversion circuit 120 is described in detail later.

The smoothing capacitor 170 is connected in parallel between the output of the power conversion circuit 120 and the load device 130. The smoothing capacitor 170 works to smooth the DC current and the DC voltage supplied to the load device 130.

The load device 130 consumes the first DC power DC1 supplied through the power conversion circuit 120. For example, the load device 130 is a battery and/or a protection circuit for the battery. In this case, the first DC power DC1 is used for electrically charging the battery to propel a vehicle.

The main power supply circuit 140 supplies the second DC power DC2 to the control circuit 150. The second DC power DC2 is power supplied via a power source different from the first AC power AC1. For example, the second DC power DC2 is power generated by an auxiliary battery (i.e., a power source) installed in a vehicle V. The main power supply circuit 140 includes, for example, the auxiliary battery and a DC/DC converter. Specifically, the main power supply circuit 140 supplies, to the control circuit 150, the second DC power DC2 required for operation of the control circuit 150 via the DC/DC converter, by connecting the DC/DC converter to the control circuit 150.

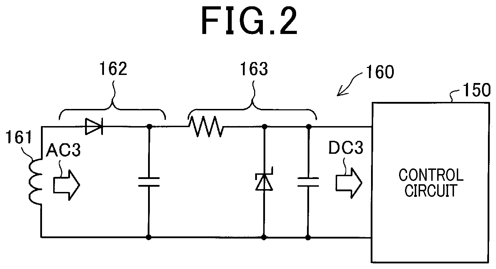

The auxiliary power supply circuit 160 converts the third AC power AC3, which is a part of the first AC power AC1, into the third DC power DC3 and then outputs the third DC power DC3 to the control circuit 150. The auxiliary power supply circuit 160 includes, as shown in Fig. 2, the first auxiliary power supply coil 161, the rectifier circuit 162, and the protection circuit that protects the control circuit 150 from overvoltage, noise, and the like. The auxiliary power supply circuit 160 receives the third AC power AC3 from the first auxiliary power supply coil 161. The auxiliary power supply circuit 160 converts the third AC power AC3 into the third DC power DC3 via the rectifier circuit 162 and the protection circuit. The auxiliary power supply circuit 160, therefore, supplies the third DC power DC3 to the control circuit 150. The voltage of the third AC power AC3 is transformed by the first power supply transformer 180 based on a rated voltage of the auxiliary power supply circuit 160.

The first auxiliary power supply coil 161 is included in the auxiliary power supply circuit 160; however, in drawings other than Fig. 2, the first auxiliary power supply coil 161 is illustrated separately from the auxiliary power supply circuit 160 in order to facilitate understanding of the technology.

The auxiliary power supply circuit 160 supplies power to the control circuit 150 when the main power supply circuit 140 is unable to supply power to the control circuit 150. Switching between the main power supply circuit 140 and the auxiliary power supply circuit 160 is described in detail later.

As shown in Fig. 1, the first power supply transformer 180 includes the negative-side first coil 111FLn on a primary side thereof and the first auxiliary power supply coil 161 on a secondary side thereof. In other words, the first power supply transformer 180 supplies, to the auxiliary power supply circuit 160, the third AC power AC3, which is a part of the first AC power AC1, via the negative-side first coil 111FLn and the first auxiliary power supply coil 161. The first power supply transformer 180 is a multi-winding transformer which has a primary side and a secondary side electrically isolated from each other. A turns ratio of the first power supply transformer 180 is determined as a function of the rated voltage of the auxiliary power supply circuit 160. Accordingly, a voltage of the third AC power AC3 is transformed based on the rated voltage of the auxiliary power supply circuit 160.

The control circuit 150 works to control an operation of the power receiving device 100. The control circuit 150 receives power from the main power supply circuit 140 or the auxiliary power supply circuit 160. The control circuit 150 includes the controller 151, the driver circuit 152, and a switching circuit (not shown). The switching circuit will be described in detail later.

The driver circuit 152 drives the switches Sw of the power conversion circuit 120. More specifically, the driver circuit 152 outputs, in response to a command from the controller 151, power required for driving the switches Sw. The driver circuit 152 is connected to the respective gates of all the switches Sw of the power conversion circuit 120. The driver circuit 152 works to apply voltages to the gates of the switches Sw to control on-off operations of the switches Sw. Fig. 1 omits connections between the driver circuit 152 and the gates for ease of understanding of the technology.

The controller 151 executes the power supply mode or the short-circuit mode using the power conversion circuit 120. More specifically, the controller 151 generates signals for controlling on and off operations of the switches Sw. The controller 151 is mainly constituted by, for example, a microcomputer, and includes a CPU, a ROM, and a RAM (not shown).

### A-2 POWER SUPPLY MODE AND SHORT-CIRCUIT MODE

The controller 151 executes a combination of the power supply mode and the short-circuit mode using the power conversion circuit 120. The short-circuit mode is a mode in which the inputs 120i of the power conversion circuit 120 are short-circuited by the power conversion circuit 120. The power supply mode is a mode in which the inputs 120i of the power conversion circuit 120 are not short-circuited. Operations of the power receiving device 100 in each of the power supply mode and the short-circuit mode will be described below.

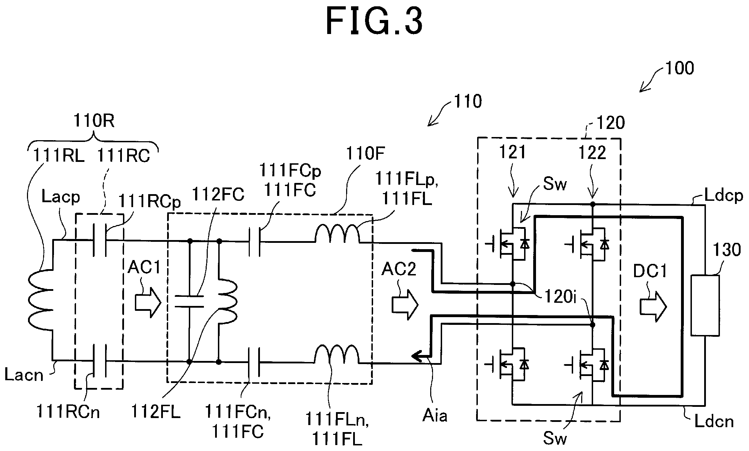

Fig. 3 indicates a direction of a current flowing through the power receiving device 100 in the power supply mode during a positive half cycle of the second AC power AC2 using the arrow *Aia*. In Figs. 3 to 6 used for describing control modes, illustrations of the power transmission device 200 and the control circuit 150 are omitted for ease of understanding of the technology. In the power supply mode, current flows through the switches Sw on the positive line Ldcp in one of the two leg circuits and the switches Sw on the negative line Ldcn in the other of the two leg circuits. This causes the current in the power supply mode during the positive half cycle of the second AC power AC2 to be rectified by the power conversion circuit 120 and to flow to the load device 130. In other words, the first DC power DC1 is delivered to the load device 130.

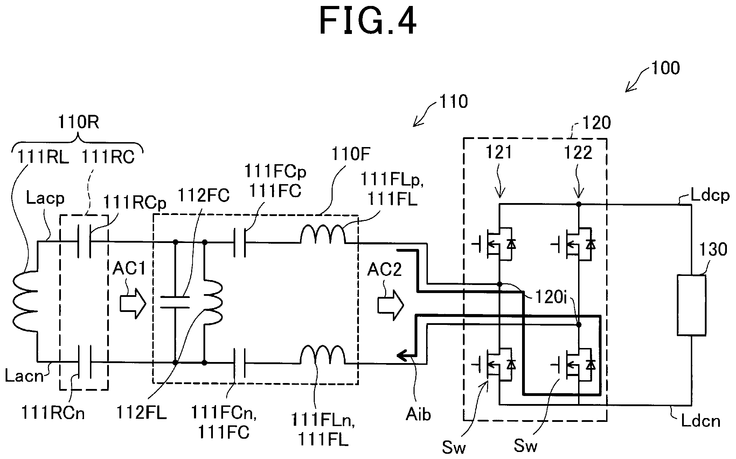

Fig. 4 indicates a direction of a current flowing through the power receiving device 100 in the short-circuit mode during a positive half cycle of the second AC power AC2 using the arrow *Aib*. In the short-circuit mode, current flows through the switches Sw on the negative line Ldcn in the two leg circuits. The controller 151 controls the switches Sw on the negative line Ldcn in the two leg circuits to be in an on state, thereby short-circuiting the inputs 120i of the power conversion circuit 120. This causes the current in the short-circuit mode during the positive half cycle of the second AC power AC2 not to flow to the load device 130 through the power conversion circuit 120. In other words, the first DC power DC1 is not supplied to the load device 130.

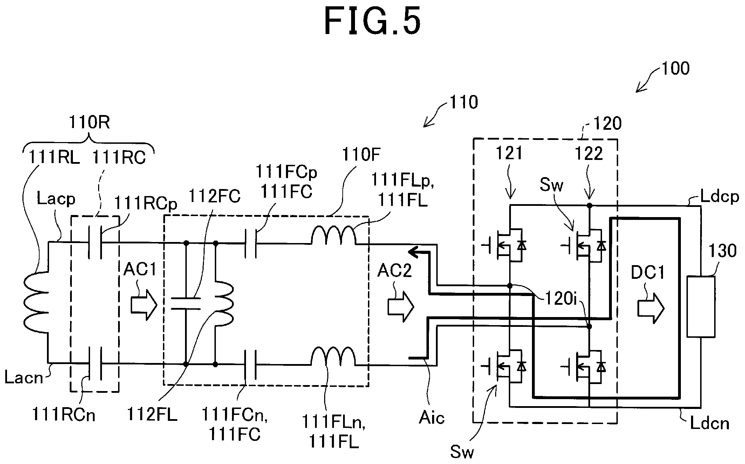

Fig. 5 indicates a direction of a current flowing through the power receiving device 100 in the power supply mode during a negative half cycle of the second AC power AC2 using the arrow *Aic*. The current in the power supply mode during the negative half cycle of the second AC power AC2 is, similarly to the power supply mode during the positive half cycle, rectified by the power conversion circuit 120 and flows to the load device 130. In other words, the first DC power DC1 is supplied to the load device 130.

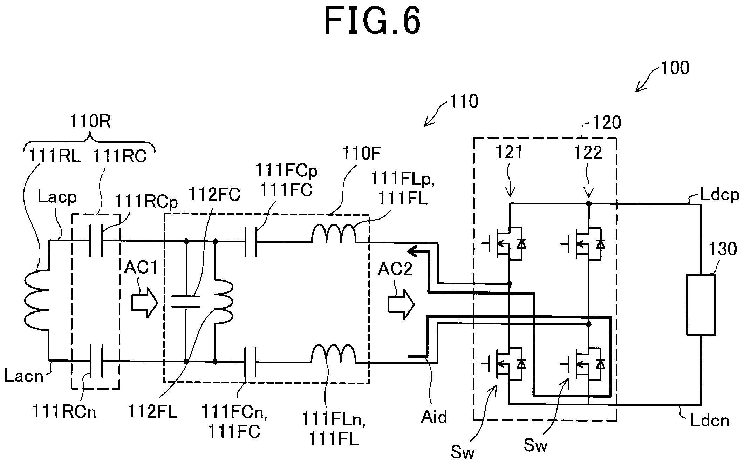

Fig. 6 indicates a direction of a current flowing through the power receiving device 100 in the short-circuit mode during a negative half cycle of the second AC power AC2 using the arrow *Aid*. The current in the short-circuit mode during the negative half cycle of the second AC power AC2, similarly to the short-circuit mode during the positive half cycle, does not flow to the load device 130 through the power conversion circuit 120. In other words, the first DC power DC1 is not supplied to the load device 130.

The controller 151 executes control in which the short-circuit mode and the power supply mode are combined, for example, to control the first DC power DC1 by the power conversion circuit 120. The controller 151 executes the short-circuit mode and the power supply mode during a half cycle of one cycle of the second AC power AC2. Specifically, the first DC power DC1 is controlled by a ratio between a period of the short-circuit mode and a period of the power supply mode in the half cycle. For example, the controller 151 sets the ratio between the period of the short-circuit mode and the period of the power supply mode in the half cycle to a predetermined ratio such that the first DC power DC1 does not exceed a rated power of the load device 130. This controls the first DC power DC1.

### A-3 SWITCHING OPERATION OF POWER SUPPLY CIRCUIT

The control circuit 150 receives power from the main power supply circuit 140 when the main power supply circuit 140 is in a normal state. However, when it is impossible to receive the power from the main power supply circuit 140 due to an abnormality in the main power supply circuit 140, the control circuit 150 receives power from the auxiliary power supply circuit 160. The abnormality in the main power supply circuit 140 is, for example, a case in which an auxiliary battery serving as a power source of the main power supply circuit 140 is unable to output power due to a failure in operation thereof.

The control circuit 150 includes the switching circuit (not shown) as described above. The switching circuit works to switch between the main power supply circuit 140 and the auxiliary power supply circuit 160. The switching circuit is, for example, a diode OR circuit. In the switching circuit, outputs of the main power supply circuit 140 and the auxiliary power supply circuit 160 are connected to the control circuit 150 through respective rectifier diodes. When receiving the second DC power DC2, the switching circuit supplies the second DC power DC2 to the control circuit 150. When not receiving the second DC power DC2, the switching circuit supplies the third DC power DC3 to the control circuit 150.

The control circuit 150 executes control in which the short-circuit mode and the power supply mode are combined even when power is received from the auxiliary power supply circuit 160. In the short-circuit mode, the inputs 120i of the power conversion circuit 120 are short-circuited. However, the auxiliary power supply circuit 160 receives supply of the third AC power AC3 through the first portion of the power receiving circuit 110. This enables the control circuit 150 to receive power from the auxiliary power supply circuit 160 even when the short-circuit mode is being executed.

In the above structure, the auxiliary power supply circuit 160 receives the third AC power AC3 through the first portion and supplies the third DC power DC3 to the control circuit 150. This enables the control circuit 150 to continue the control even when power cannot be received from the main power supply circuit 140. Further, since the first portion has small fluctuations in current and voltage even when the short-circuit mode is executed, it is possible to supply the third AC power AC3 to the auxiliary power supply circuit 160. This enables the control circuit 150 in the power receiving device 100 to operate even when it is impossible for the control circuit 150 to receive power from the main power supply circuit 140.

Further, in the above structure, the auxiliary power supply circuit 160 is supplied with power via the first coil 111FL constituting the filter circuit 110F. Unlike the filter circuit 110F, the resonance circuit 110R resonates based on a frequency of the received AC power. For this reason, a voltage at components of the resonance circuit 110R tends to be higher than a voltage at components of the filter circuit 110F. Accordingly, in the power receiving device 100 of the present disclosure, power is supplied from the filter circuit 110F to the auxiliary power supply circuit 160, thereby reducing a voltage applied to the auxiliary power supply circuit 160. This results in a reduction in electrical loss in the auxiliary power supply circuit 160.

Further, in the above-described structure, the auxiliary power supply circuit 160 functions to receive the third AC power AC3 via the first power supply transformer 180. This facilitates a decrease in voltage applied to the auxiliary power supply circuit 160 depending upon a turns ratio of the first power supply transformer 180. This minimizes electrical loss in the auxiliary power supply circuit 160 of the power receiving device 100 as compared with a configuration in which the auxiliary power supply circuit 160 is directly connected to the first portion. Furthermore, since the auxiliary power supply circuit 160 is isolated from the power receiving circuit 110 by the first power supply transformer 180, the auxiliary power supply circuit 160 is less susceptible to noise from the power receiving circuit 110.

### B SECOND EMBODIMENT

In the first embodiment, the controller 151 executes control in which the short-circuit mode and the power supply mode are combined in order to control the first DC power DC1. However, the controller 151 may further execute control in which the short-circuit mode and the power supply mode are combined in order to protect the load device 130. More specifically, the controller 151 of the second embodiment executes the short-circuit mode when power is received from the auxiliary power supply circuit 160. In other words, the controller 151 of the second embodiment executes the short-circuit mode when it is impossible to receive power from the main power supply circuit 140 due to a failure in operation of the main power supply circuit 140. By executing the short-circuit mode, supply of the first DC power DC1 to the load device 130 is stopped. This enables the power receiving device 100 of the second embodiment to prevent the failure in operation of the main power supply circuit 140 from affecting the load device 130. Note that a configuration of the second embodiment is the same as the configuration of the first embodiment.

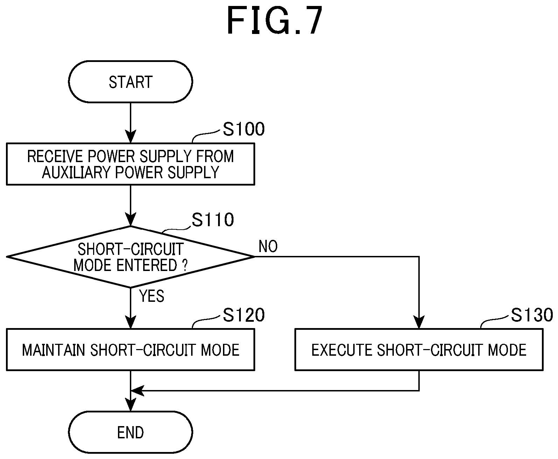

The operation of the controller 151 will be described with reference to Fig. 7. When it is impossible for the controller 151 to receive power from the main power supply circuit 140, the controller 151 initiates the program in Fig. 7.

First, in step S100 in Fig. 7, the control circuit 150 receives supply of power from the auxiliary power supply circuit 160. In other words, the control circuit 150 changes the power supply circuit and operates on the third DC power DC3.

The routine then proceeds to step S110 wherein the controller 151 determines whether the short-circuit mode is entered. If a YES answer is obtained, meaning that the controller 151 is operating in the short-circuit mode, then the routine proceeds to step S120. Alternatively, if a NO answer is obtained, meaning that the controller 151 is operating in the power supply mode, then the routine proceeds to step S130.

In step S120 of Fig. 7, the control circuit 150 continues the short-circuit mode. Specifically, the control circuit 150 switches from a combination control mode in which the short-circuit mode and the power supply mode are combined to a single control mode in which only the short-circuit mode is executed. After step S120, the control circuit 150 terminates the processing.

In step S130 of Fig. 7, the control circuit 150 initiates the short-circuit mode. Specifically, the control circuit 150 switches from the power supply mode to the short-circuit mode. For example, even when the control circuit 150 periodically executes the power supply mode, the control circuit 150 executes the short-circuit mode regardless of a cycle of the power supply mode. After step S130, the control circuit 150 terminates the processing.

As apparent from the above discussion, when the main power supply circuit 140 is unable to supply power to the control circuit 150, the control circuit 150 executes the short-circuit mode by receiving power from the auxiliary power supply circuit 160. This enables the power receiving device 100 to prevent an abnormality in the main power supply circuit 140 from affecting the load device 130.

### C THIRD EMBODIMENT

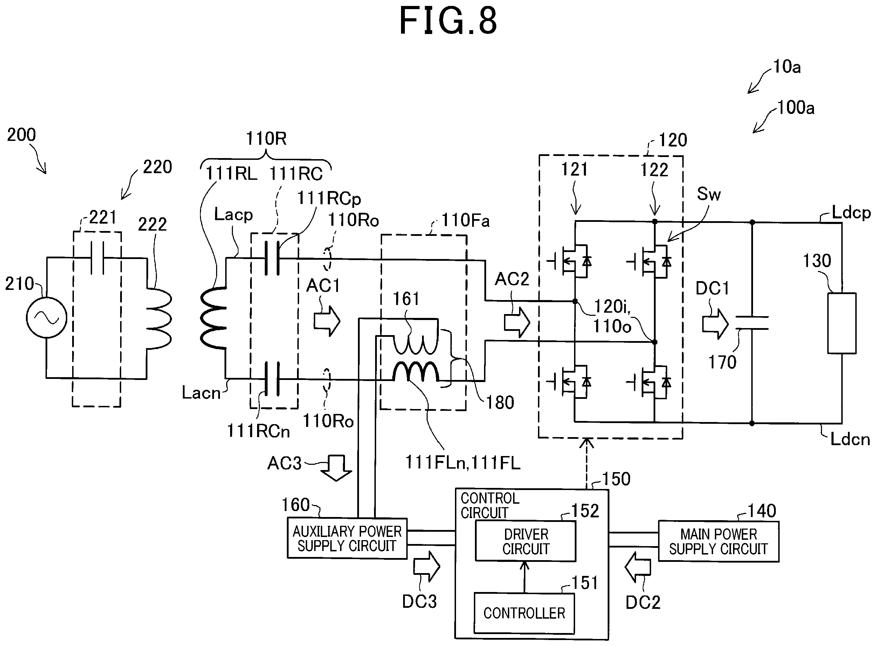

In the above embodiments, the filter circuit 110F includes a plurality of capacitors and a plurality of coils. However, as shown in Fig. 8, the filter circuit 110F may be constituted by a single first coil 111FL. Specifically, the above-described first portion includes the negative-side first coil 111FLn, the negative-side resonance capacitor 111RCn, the positive-side resonance capacitor 111RCp, and the power transmission coil 222. The filter circuit 110Fa of the third embodiment functions as a low-pass filter. When the input 110Ro of the low-pass filter has a constant-current characteristic, the output 110o of the low-pass filter also has a constant-current characteristic. Other configurations of the third embodiment are the same as the configurations of the first embodiment. In Fig. 8, components different from those of the first embodiment are denoted by reference signs of the first embodiment with "a" appended thereto.

The above-described structure simplifies the configuration of the power receiving circuit 110a as compared with a configuration in which the filter circuit 110F is constituted by a plurality of the first coils 111FL or a configuration in which the filter circuit 110F includes the first capacitor 111FC. More specifically, the power receiving circuit 110a in this embodiment is capable of reducing the number of components and shorten wiring lengths thereof as compared with a configuration including a band-pass filter or an immittance filter. Therefore, the power receiving device 100a in this embodiment is capable, for example, preventing malfunction due to the influence of noise via the filters or the wiring*.*

### D FOURTH EMBODIMENT

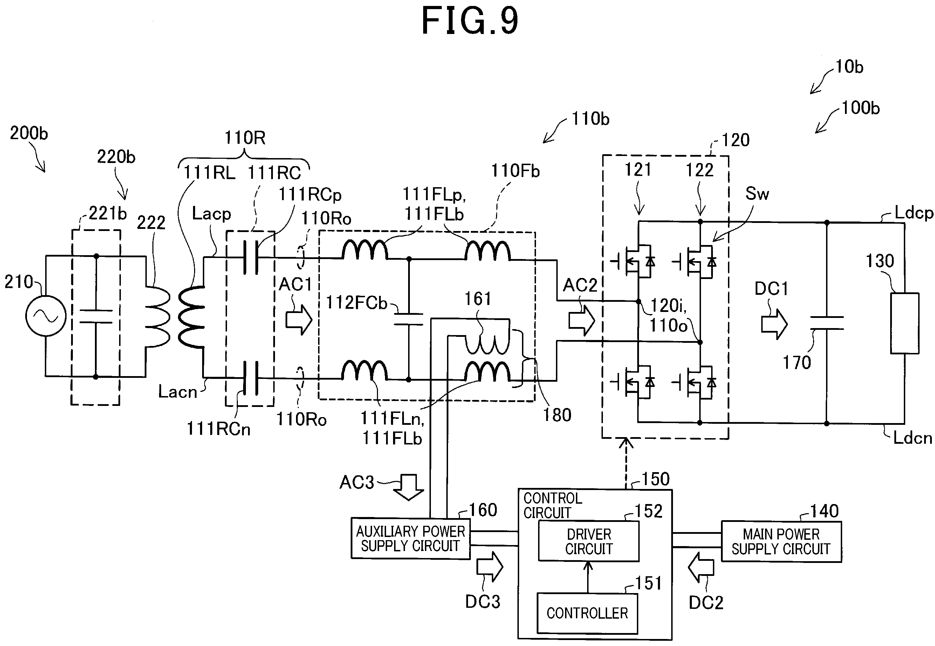

The wireless power feeding system 10b of the fourth embodiment, as shown in Fig. 9, includes the power transmission device 200b which is equipped with the power transmission resonant circuit 220b implemented by a parallel resonant circuit. More specifically, the power transmission resonant circuit 220b includes the power transmission coil 222 and the power transmission resonant capacitor 221b connected in parallel with the power transmission coil 222. Therefore, in the wireless power feeding system 10b, the power transmission resonant circuit 220b is a parallel resonant circuit and the power receiving resonant circuit 110R is a series resonant circuit. This causes the outputs 110Ro of the power receiving resonant circuit 110R to have a constant-voltage characteristic*.*

The power receiving circuit 110b of the wireless power feeding system 10b includes the filter circuit 110Fb that functions as an immittance filter. The filter circuit 110Fb has four first coils 111FLb connected in series between the power receiving coil 111RL and the inputs 120i of the power conversion circuit 120. The four first coils 111FLb are composed of two positive-side first coils 111FLp and two negative-side first coils 111FLn. The filter circuit 110Fb also includes the second capacitor 112FCb arranged to connect between the positive-side first coils 111FLp and between the negative-side first coils 111FLn.

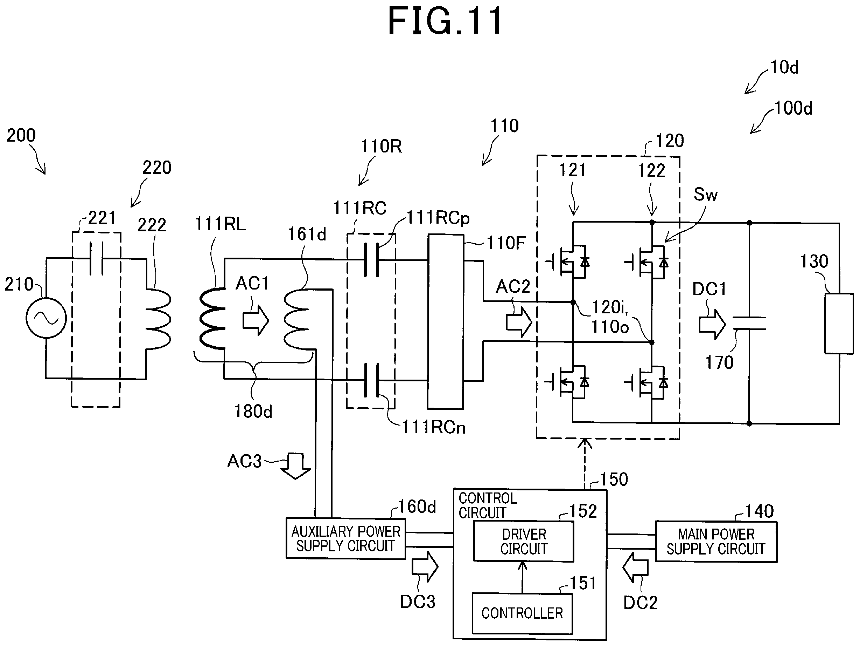

With the above-described structure, the filter circuit 110Fb, as described above, functions as an immittance filter. The outputs 110o of the immittance filter has a constant-current characteristic when the inputs 110Ro of the immittance filter has a constant-voltage characteristic. In the fourth embodiment, the power transmission resonant circuit 220b is a parallel resonant circuit and the power receiving resonant circuit 110R is configured as a series resonant circuit. Accordingly, the outputs 110Ro of the power receiving resonant circuit 110R have a constant-voltage characteristic. For this reason, since the filter circuit 110Fb is connected to the outputs 110Ro of the power receiving resonant circuit 110R, the output portion 110o of the filter circuit 110Fb has a constant-current characteristic. In other words, a circuit portion connected in series to the inputs 120i of the power conversion circuit 120, which also serve as the outputs of the filter circuit 110Fb, has a constant-current characteristic. Accordingly, in the fourth embodiment, the first portion includes the two positive-side first coils 111FLp, the two negative-side first coils 111FLn, the positive-side resonant capacitor 111RCp, the negative-side resonant capacitor 111RCn, and the power receiving coil 111RL. Other configurations of the fourth embodiment are the same as those of the first embodiment. In Fig. 11, components different from those of the first embodiment are denoted by reference signs of the first embodiment with "b" appended.

In the above-described structure, the filter circuit 110Fb has a constant-current characteristic. Accordingly, even when the resonant circuit 110R has a constant-voltage characteristic, the power receiving device 100b in this embodiment has the first portion in which variations in voltage and current are small.

### E FIFTH EMBODIMENT

The power receiving device 100c of the fifth embodiment further includes the first voltage sensor 190 that obtains the voltage at the auxiliary power supply circuit 160, in addition to the configuration of the power receiving device 100 of the first embodiment.

The first voltage sensor 190 is connected in parallel with the first auxiliary power supply coil 161. The first voltage sensor 190 functions as an integrator circuit. The first voltage sensor 190 obtains a current value flowing through the first auxiliary power supply coil 161 by integrating the voltage value applied to the first auxiliary power supply coil 161. The current value flowing through the first auxiliary power supply coil 161 depends on a turns ratio of the first power supply transformer 180 and a current value flowing through the negative-side first coil 111FLn. Accordingly, the first voltage sensor 190 transmits, to the controller 151, information related to an input current of the power conversion circuit 120, the input current being a current flowing through the negative-side first coil 111FLn.

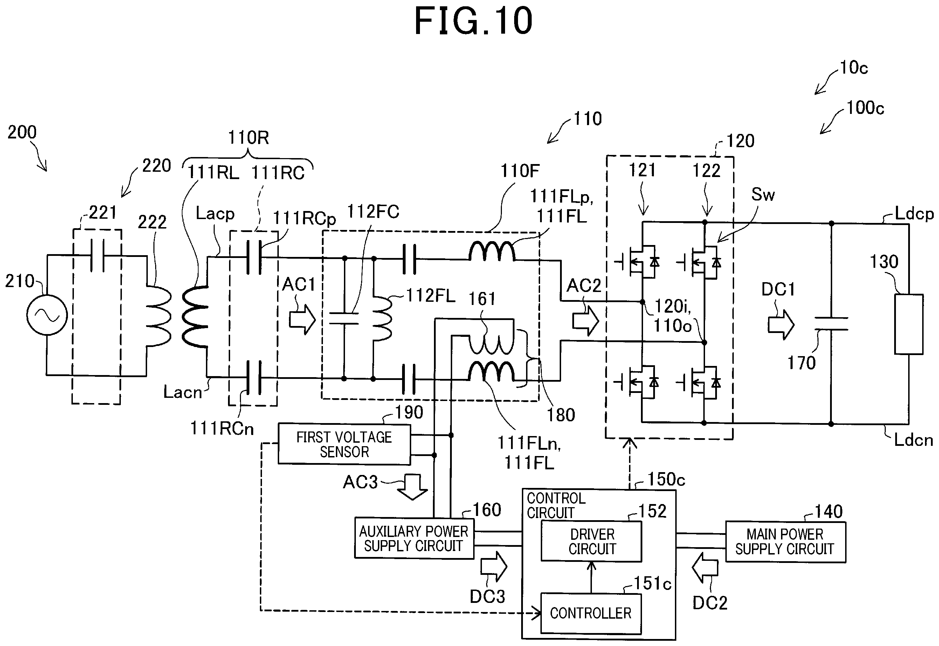

The controller 151c of the fifth embodiment controls a ratio between a period of the short-circuit mode and a period of the power supply mode in a cycle of the first AC power AC1 as a function of a value obtained by integrating a voltage measured by the first voltage sensor 190. In other words, the controller 151c controls the first DC power DC1. For example, when a current flowing through the negative-side first coil 111FLn becomes excessive due to an abnormality of the power receiving device 100, the controller 151c increases the ratio of the short-circuit mode in the cycle of the first AC power AC1. Therefore, the load device 130 can be protected by reducing the first DC power DC1 or stopping the supply thereof. In addition, the controller 151c is capable of controlling the ratio between the period of the short-circuit mode and the period of the power supply mode based on the current flowing through the negative-side first coil 111FLn so as to satisfy the first DC power DC1 requested by the load device 130. Other configurations of the fifth embodiment are the same as the configurations of the first embodiment. In Fig. 10, the configurations different from the first embodiment are denoted by reference numerals obtained by appending "c" to the reference numerals of the first embodiment.

In other words, the value obtained by integrating the voltage serves as information based on a current flowing through the first coil 111FL. The control circuit 150c is capable of controlling, for example, power adjustment of the load device 130 and a protection operation from overcurrent without requiring a current sensor for measuring an input current of the power conversion circuit 120. Generally, since a voltage sensor is less expensive than a current sensor, the power receiving device 100c of the present disclosure may reduce the cost of the device.

### F SIXTH EMBODIMENT

In the first embodiment, the first power supply transformer 180 supplies the third AC power AC3 to the auxiliary power supply circuit 160 through the first coil 111FL of the filter circuit 110F. However, in the sixth embodiment, as illustrated in Fig. 11, the first power supply transformer 180 has a primary side configured by the power transmission coil 222 and a secondary side configured by the second auxiliary power supply coil 161d. The first power supply transformer 180 of the sixth embodiment, which corresponds to the first power supply transformer 180 of the first embodiment, is referred to as the second power supply transformer 180d. The second auxiliary power supply coil 161d corresponds to the first auxiliary power supply coil 161 of the first embodiment.

The second power supply transformer 180d supplies the third AC power AC3, which is a part of the first AC power AC1, to the auxiliary power supply circuit 160d via the power receiving coil 111RL and the second auxiliary power supply coil 161d. The second power supply transformer 180d is a multi-winding transformer and has a primary side and a secondary side electrically insulated from each other. A turns ratio of the second power supply transformer 180d is designed as a function of a rated voltage of the auxiliary power supply circuit 160d. Other configurations of the sixth embodiment are the same as those of the first embodiment. In Fig. 11, components different from those in the first embodiment are assigned reference numerals of the first embodiment with "d". However, in order to facilitate understanding of the technology, illustration of the filter circuit 110F is omitted.

The above-described structure enables the auxiliary power supply circuit 160d to normally supply the third DC power DC3 to the controller 151 through the components of the resonance circuit 110R even if an abnormality occurs in the first coil 111FL or the first capacitor 111FC.

The above-described structure also serves to easily achieve a reduction in voltage applied to the auxiliary power supply circuit 160d depending upon the turns ratio of the second power supply transformer 180d. This enables the power receiving device 100d to reduce an energy loss of the auxiliary power supply circuit 160d compared to a configuration in which the auxiliary power supply circuit 160d is directly connected to the power receiving coil 111RL. Furthermore, since the auxiliary power supply circuit 160d is insulated from the power receiving circuit 110 by the second power supply transformer 180d, the auxiliary power supply circuit 160d is less susceptible to noise from the power receiving circuit 110.

### G SEVENTH EMBODIMENT

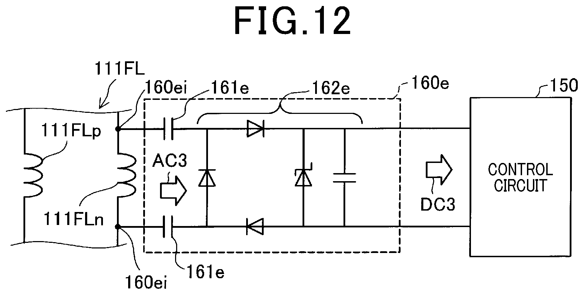

In the first embodiment, the third AC power AC3 is supplied to the auxiliary power supply circuit 160 through the first power supply transformer 180. However, the supply of the third AC power AC3 to the auxiliary power supply circuit 160 may be achieved in other methods. The power receiving device 100 of the seventh embodiment does not include the first power supply transformer 180. Fig. 12 illustrates a circuit portion corresponding to the first coil 111FL of the first embodiment. The inputs 160ei of the auxiliary power supply circuit 160e are connected to both ends of the negative-side first coil 111FLn. The auxiliary power supply circuit 160e includes the insulating capacitors 161e and the rectifier circuit 162e equipped with a Zener diode, which are connected in series to the ends of the inputs 160ei.

The auxiliary power supply circuit 160e is supplied with the third AC power AC3 via the insulating capacitors 161e. The auxiliary power supply circuit 160e is, therefore, electrically insulated from the power receiving circuit 110. The auxiliary power supply circuit 160e works to rectify the third AC power AC3 using the rectifier circuit 162e. The auxiliary power supply circuit 160e supplies the third DC power DC3 to the control circuit 150 with a constant voltage by the Zener diode set based on the rated voltage of the control circuit 150. Other configurations of the seventh embodiment are the same as those of the first embodiment. In Fig. 12, components different from the auxiliary power supply circuit 160 of the first embodiment are assigned reference numerals of the first embodiment with "e".

The above-described structure enables the auxiliary power supply circuit 160e to be reduced in size compared to a configuration in which power is supplied while being insulated from the power receiving circuit 110 by a transformer. Furthermore, since the auxiliary power supply circuit 160e is insulated from the power receiving circuit 110, the auxiliary power supply circuit 160e is less susceptible to noise from the power receiving circuit 110. In addition, since the auxiliary power supply circuit 160e does not include a resistor, an electrical loss is reduced, and thus the auxiliary power supply circuit 160e is capable of operating with high efficiency.

### H EIGHTH EMBODIMENT

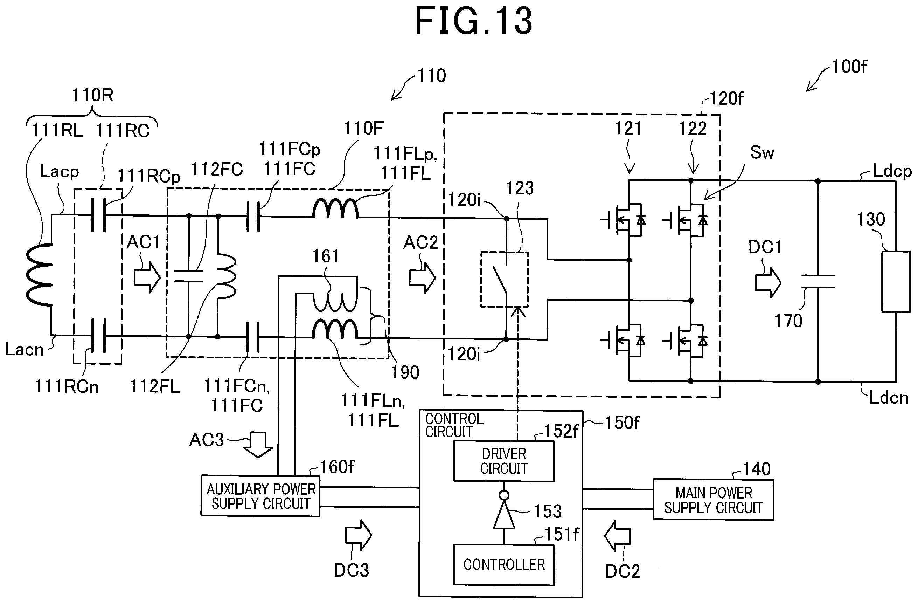

In the above embodiments, in the short-circuit mode, the inputs 120i of the power conversion circuit 120 are short-circuited by controlling the switches Sw of the negative electrode line Ldcn in the two leg circuits to be in an ON state. However, the short-circuit mode may be realized by other methods. As illustrated in Fig. 13, the power conversion circuit 120f of the eighth embodiment includes the protection circuit 123 that short-circuits the inputs 120i of the power conversion circuit 120f. The power conversion circuit 120f executes the power supply mode and the short-circuit mode by using the protection circuit 123.

More specifically, the protection circuit 123 serves as a switch that selectively connects the negative-side line Lacn and the positive-side line Lacp at the inputs 120i of the power conversion circuit 120. Specifically, the protection circuit 123 switches between ON and OFF in response to a command from the control circuit 150f. The protection circuit 123 is placed in an ON state when the short-circuit mode is executed by the control circuit 150f. The protection circuit 123 is placed in an OFF state when the power supply mode is executed by the control circuit 150f. Therefore, in the short-circuit mode, the inputs 120i of the power conversion circuit 120f are short-circuited by the protection circuit 123.

Furthermore, the control circuit 150f of the eighth embodiment includes the inverting output unit 153. Specifically, the inverting output unit 153 is implemented by a NOT gate. The inverting output unit 153 inverts a command from the controller 151f and sends the inverted command to the driver circuit 152f.

The controller 151f issues a command in the form of a pulse signal to cause the protection circuit 123f to execute the power supply mode and the short-circuit mode. The protection circuit 123f performs an operation in the short-circuit mode when the pulse signal is ON. The protection circuit 123f performs an operation in the power supply mode when the pulse signal is OFF. Therefore, an ON state of the pulse signal from the controller 151f is inverted by the inverting output unit 153 to cause the protection circuit 123f to execute the power supply mode. An OFF state of the pulse signal from the controller 151f is inverted by the inverting output unit 153 to cause the protection circuit 123f to execute the short-circuit mode.

For example, when it is impossible for the control circuit 150f to receive power supply, the pulse signal outputted by the controller 151f is turned OFF. The protection circuit 123, therefore, executes the short-circuit mode. This stops the supply of the first DC power DC1, thereby protecting the load device 130 in the event of the above abnormality of the power receiving device 100f.

Other configurations of the eighth embodiment are the same as those of the first embodiment. In Fig. 13, components different from those in the first embodiment are assigned reference numerals of the first embodiment with "f". Note that the leg circuits in the power conversion circuit 120f perform rectification under control of another control circuit 150 (not illustrated).

In the above-described structure, the auxiliary power supply circuit 160f works to supply the power necessary only for controlling the protection circuit 123. Therefore, the power receiving device 100f in this embodiment is capable of reducing a rated power of the auxiliary power supply circuit 160f compared to a configuration in which circuits other than the protection circuit 123 of the power conversion circuit 120f are also controlled. This enables the power receiving device 100f to reduce a size of the auxiliary power supply circuit 160f.

Furthermore, since the control circuit 150f is designed to control only the switch of the protection circuit 123, control of the power receiving device 100f in this embodiment is more easily realized than a case where other switches Sw of the power conversion circuit 120f are controlled.

The structure in this embodiment also has the power receiving device 100 designed to output an OFF pulse signal when it is impossible for the control circuit 150f to receive power supply. By the inverting output unit 153, an ON pulse signal is input to the protection circuit 123, and the short-circuit mode is established. The power receiving device 100f in this embodiment is, therefore, capable of protecting the load device 130 by operating the protection circuit 123 in the short-circuit mode in the event of an abnormality of the control circuit 150f.

### I NINTH EMBODIMENT

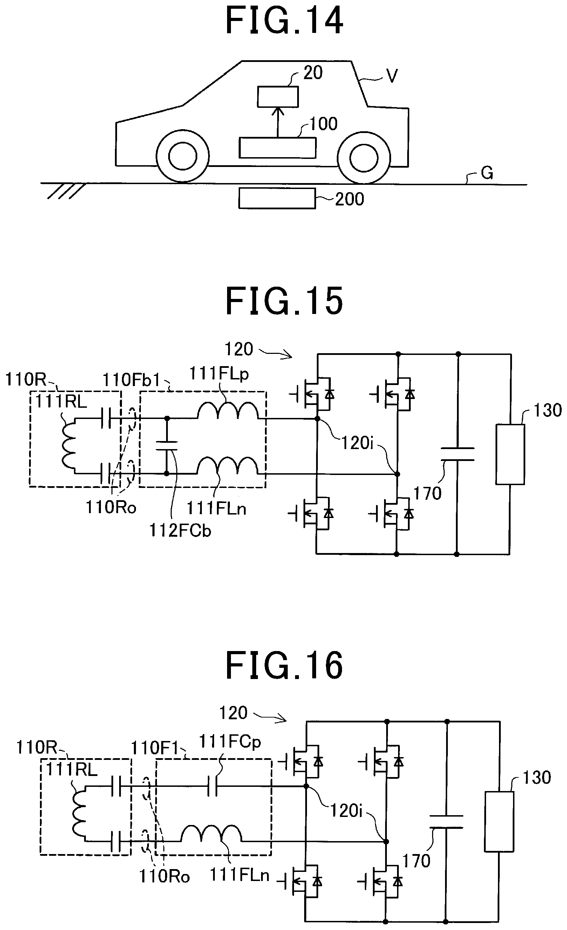

In the above embodiments, the power receiving device 100 is mounted on the vehicle V as an example. In a case where the power receiving device 100 is mounted on the vehicle V and the vehicle V includes the vehicle controller 20 that controls the vehicle V, the control circuit 150 may be configured to notify the vehicle controller 20. As illustrated in Fig. 14, the power transmission device 200 transmits power to the power receiving device 100 mounted on the vehicle V in a state where the power transmission device 200 is installed on the ground G. The power receiving device 100 of the eighth embodiment includes, instead of the first voltage sensor 190 of the fifth embodiment, a second voltage sensor that measures a voltage developed at the first auxiliary power supply coil 161. The second voltage sensor outputs an instantaneous value of the voltage, rather than an integration circuit, to the controller 151 of the ninth embodiment. Other configurations of the ninth embodiment are the same as those of the fifth embodiment.

When the voltage at the auxiliary power supply circuit 160 determined using the output from the second voltage sensor is lower than a predetermined reference voltage, the control circuit 150 of the ninth embodiment executes the short-circuit mode or notifies the vehicle controller 20 of information related to an input voltage to the auxiliary power supply circuit 160. When the input voltage to the auxiliary power supply circuit 160 is equal to or higher than the predetermined reference voltage, the control circuit 150 executes the power supply mode. The reference voltage is, for example, a maximum voltage at the auxiliary power supply circuit 160 during normal operation.

With the above-described structure, for example, when an input voltage to the auxiliary power supply circuit 160 is lower than the reference voltage as an abnormal state, the power receiving device 100 is capable of protecting itself by executing the short-circuit mode, or of causing a driver of the vehicle V to consider countermeasures by notifying the vehicle V of the abnormality.

### J FIRST MODIFICATION

In the eighth embodiment, the protection circuit 123 is configured by the switch that connects the negative-side line Lacn and the positive-side line Lacp. However, the protection circuit 123 may be configured by the switches Sw connecting to the negative electrode line Ldcn in the leg circuits 121 and 122 in the power conversion circuit 120. Specifically, the control circuit 150f works to control only the switches Sw connecting with the negative electrode line Ldcn in the leg circuits 121 and 122. Since the short-circuit mode is realized only by the switches Sw on the side of the negative electrode line Ldcn, control of the switches Sw on the side of the positive electrode line Ldcp is not required. Note that the switches Sw on the side of the positive electrode line Ldcp are controlled by another control circuit.

With the above-described structure, the auxiliary power supply circuit 160 supplies only the power necessary for some of the switches Sw of the power conversion circuit 120. This enables the power receiving device 100f to reduce a rated power of the auxiliary power supply circuit 160 compared to a configuration in which all of the switches Sw of the power conversion circuit 120f are controlled. The power receiving device 100f in this modification is, therefore, capable of reducing a size of the auxiliary power supply circuit 160.

Furthermore, since the protection circuit 123 is configured by the switches Sw of the power conversion circuit 120f, the power conversion circuit 120f does not need to additionally have the switches Sw for the protection circuit 123. This also enables the power receiving device 100f in this modification to be reduced in size.

### K SECOND MODIFICATION

The filter circuit 110Fb of the fourth embodiment may be made to function as an immittance filter by another configuration. For example, the immittance filter is also realized by the configuration of the filter circuit 110Fb1 in Fig. 15. In Fig. 15, the filter circuit 110Fb of Fig. 9 is replaced with the filter circuit 110Fb1. Note that Fig. 15 omits the power transmission device 200b and the control circuit 150 in order to facilitate understanding of the technology. In the filter circuit 110Fb1 of Fig. 15, the positive-side first coil 111FLp and the negative-side first coil 111FLn are connected in series with the power receiving coil 111RL and the inputs 120i of the power conversion circuit 120. Furthermore, in the filter circuit 110Fb1 of Fig. 15, the second capacitor 112FCb is connected to the outputs 110Ro of the power receiving resonant circuit 110R. The immittance filter is also realized by such a configuration of the filter circuit 110Fb1.

### L THIRD MODIFICATION

The filter circuit 110F in the first embodiment may be made to function as a band-pass filter by another configuration. For example, the band-pass filter is also realized by any one of the filter circuit 110F1 to the filter circuit 110F3 in Fig. 16 to Fig. 18. In each of Figs. 16 to 18, the filter circuit 110F of Fig. 1 is replaced with one of the filter circuit 110F1 to the filter circuit 110F3. Note that in Fig. 16 to Fig. 18, illustration of the power transmission device 200 and the control circuit 150 are omitted in order to facilitate understanding of the technology.

In the filter circuit 110F1 of Fig. 16, the negative-side first coil 111FLn and the positive-side first capacitor 111FCp are connected in series to the power receiving coil 111RL and the inputs 120i of the power conversion circuit 120.

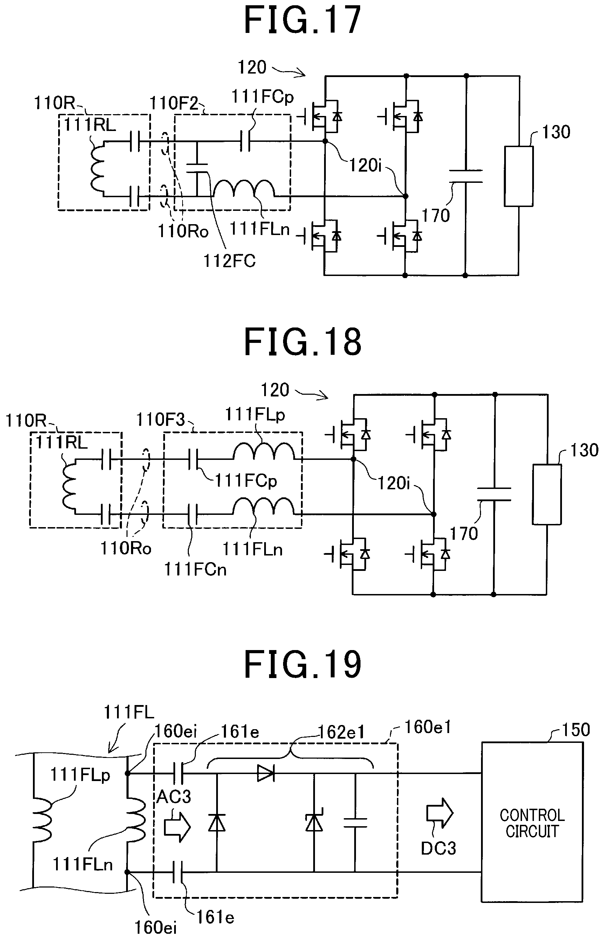

In the filter circuit 110F2 of Fig. 17, in addition to the filter circuit 110F1 of Fig. 16, the second capacitor 112FC is further connected to the outputs 110Ro of the power receiving resonant circuit 110R.

In the filter circuit 110F3 of Fig. 18, the positive-side first coil 111FLp, the positive-side first capacitor 111FCp, the negative-side first coil 111FLn, and the negative-side first capacitor 111FCn are connected in series to the power receiving coil 111RL and the inputs 120i of the power conversion circuit 120.

The band-pass filter may also be realized by any one of the above configurations.

### M FOURTH MODIFICATION

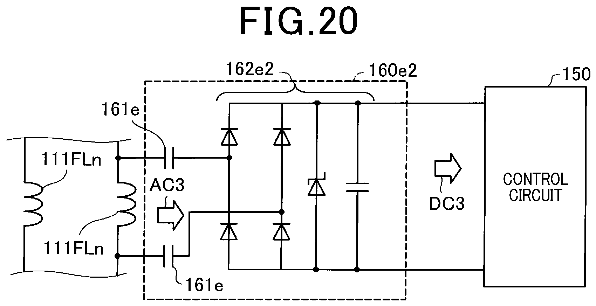

The auxiliary power supply circuit 160e of the seventh embodiment may be realized by another configuration. For example, the rectifier circuit 162e1 in the auxiliary power supply circuit 160e1 of Fig. 19 has a configuration in which one rectifier diode connected in series to the insulating capacitor 161e is removed from the rectifier circuit 162e of Fig. 12 of the seventh embodiment. In addition, the rectifier circuit 162e2 in the auxiliary power supply circuit 160e2 of Fig. 20 is configured by a bridge circuit including rectifier diodes. The auxiliary power supply circuit 160e of the seventh embodiment is also realized by the above configurations.

### M FIFTH EMBODIMENT

(1) In the above embodiments, the power receiving device 100 is mounted on the vehicle V. However, the power receiving device 100 may alternatively be mounted on other moving bodies. For example, the power receiving device 100 may be mounted on an airplane.
(2) In the above embodiments, a storage battery is exemplified as the load device 130. However, the load device 130 is not limited to the battery. The load device 130 may be, for example, a lighting device, a power unit, or the like.
(3) In the first embodiment, the power receiving resonance capacitor 111RC includes the positive-side resonance capacitor 111RCp disposed in the positive-side line Lacp of the power receiving circuit 110, and the negative-side resonance capacitor 111RCn disposed in the negative-side line Lacn of the power receiving circuit 110. However, the power receiving resonance capacitor 111RC may include only the positive-side resonance capacitor 111RCp disposed in the positive-side line Lacp of the power receiving circuit 110.
(4) In the third embodiment, the filter circuit 110F is configured by one first coil 111FL. However, the filter circuit 110F only needs to be configured by one or more first coils 111FL. For example, the filter circuit 110F may be configured by two or three first coils 111FL.
(5) In the above embodiments, the switches Sw of the synchronous rectification circuit 120 are made of MOSFETs. However, the switches Sw of the synchronous rectification circuit 120 may be other switching devices. Each of the switches Sw may be, for example, a BJT (bipolar junction transistor) or an IGBT (insulated gate bipolar transistor).
(6) In the above embodiments, as an example of a case where power cannot be supplied from the main power supply circuit 140, a failure in operation of an auxiliary battery is cited. However, the control circuit 150 may be in a state of being unable to receive power supply from the main power supply circuit 140 due to other factors. For example, the control circuit 150 may reach a state of being unable to receive power supply from the main power supply circuit 140 due to an insufficient remaining amount of the auxiliary battery or a failure in operation of a circuit of the load device 130.
(7) In the sixth embodiment, the power receiving circuit 110 includes the filter circuit 110F. However, the power receiving circuit 110 does not have to include the filter circuit 110F.
(8) In the seventh embodiment, the control circuit 170f includes the inverting output unit 153. However, the control circuit 170f does not have to include the inverting output unit 153.
(9) In the above embodiments, the auxiliary power supply circuit 160 receives supply of the third AC power AC3 through the first coil 111FL or the power receiving coil 111RL. However, the auxiliary power supply circuit 160 may receive supply of the third AC power AC3 from the first capacitor 111FC or the power receiving resonance capacitor 111RC.
(10) In the above embodiments, the auxiliary power supply circuit 160 receives supply of the third AC power AC3 in a state of being electrically insulated from the power receiving circuit 110 by the first power supply transformer 180 or the insulating capacitor 161e. However, the auxiliary power supply circuit 160 may receive supply of the third AC power AC3 in a state of being electrically connected to the power receiving circuit 110.
(11) In the above embodiments, the auxiliary power supply circuit 160 may be configured by combining the first power supply transformer 180 and the insulating capacitor 161e. In other words, the auxiliary power supply circuit 160 receives supply of the third AC power AC3 through the first power supply transformer 180 and the insulating capacitor 161e. This minimizes a risk that the auxiliary power supply circuit 160 may be affected by noise from the power receiving circuit 110 due to double insulation.
(12) In the above embodiments, the switching circuit of the control circuit 150 is made of a diode OR circuit. However, the switching circuit may be configured by a switch. The switching circuit is driven by the second DC power DC2, and connects the control circuit 150 and the main power supply circuit 140 when receiving supply of the second DC power DC2.

The switching circuit works to selectively connect the control circuit 150 and the auxiliary power supply circuit 160 when not receiving supply of the second DC power DC2.

The present disclosure is not limited to the embodiments and modifications described above, and can be realized with various configurations within a scope that does not depart from the spirit thereof. For example, technical features in the embodiments and modifications corresponding to the technical features in each form described in the section of the Summary of the Invention can be appropriately replaced or combined in order to solve part or all of the problems described above or to achieve part or all of the effects described above. In addition, if a technical feature is not described as essential in the present specification, the technical feature can be appropriately deleted.

### OTHER MODES OF THIS DISCLOSURE

This disclosure provides the following aspects.

### FIST ASPECT

A power receiving apparatus (100, 100a to 100f) that is configured to receive a first AC power (AC1) in a wireless manner through a magnetic field, comprising:
a power receiving circuit (110, 110a, 110b) that includes a power receiving coil (111RL) configured to receive the first AC power;
a power conversion circuit (120, 120f) that works to convert a second AC power (AC2), which is a first part of the first AC power, into a first DC power (DC1);
a load device (130) that consumes the first DC power;
a main power supply circuit (140) that supplies a second DC power (DC2);
an auxiliary power supply circuit (160, 160d, 160f, 160e, 160e1, 160e2) that works to convert a third AC power (AC3), which is a second part of the first AC power, into a third DC power (DC3) and to output the third DC power; and
a control circuit (150, 150c, 150f) that works to control an operation of the power receiving apparatus, the control circuit being supplied with electrical power from the main power supply circuit or the auxiliary power supply circuit, wherein
the power receiving circuit has outputs (110o) connected to inputs (120i) of the power conversion circuit,
the power receiving circuit includes a first portion and a second portion, the first portion being a portion where variations in a current and a voltage are smaller in response to the inputs of the power conversion circuit being short-circuited, the second portion being a portion where variations in a current and a voltage are greater in response to the inputs of the power conversion circuit being short-circuited,
the auxiliary power supply circuit being supplied with the third AC power through the first portion,
the control circuit works to execute a combination of a short-circuit mode and a power supply mode, the short-circuit mode being a mode in which the inputs of the power conversion circuit are short-circuited, the power supply mode being a mode in which the inputs of the power conversion circuit are not short-circuited, and
the control circuit receives the electrical power from the auxiliary power supply circuit when it is impossible for the control circuit to receive the electrical power from the main power supply circuit.

### SECOND ASPECT

The power receiving apparatus according to the above-described first aspect, wherein the control circuit executes the short-circuit mode when the control circuit is required to be supplied with the power from the auxiliary power supply circuit.

### THIRD ASPECT

The power receiving device according to the above-described second aspect, wherein the power receiving circuit further comprises:
a resonance circuit (110R) having a resonance frequency corresponding to a frequency of the first AC power; and
a filter circuit (110F, 110F1-110F3, 110Fb, 110Fb1) that suppresses a harmonic component of the first AC power.

The resonance circuit comprises the power receiving coil. In the filter circuit, at least one of one or more first coils (111FL) and one or more first capacitors (111FC) is connected in series with the power receiving coil and at least one of the inputs of the power conversion circuit. The first portion is at least one of the one or more first capacitors and the one or more first coils.

### FOURTH ASPECT

The power receiving apparatus according to the above-described third aspect, wherein the auxiliary power supply circuit further comprises a first auxiliary power supply coil (161), and further comprising a first power supply transformer (180) that supplies the third AC power to the auxiliary power supply circuit. The first power supply transformer includes the first auxiliary power supply coil and one of the one or more first coils which supplies the third AC power to the auxiliary power supply circuit.

### FIFTH SPECT

The power receiving apparatus according to the above-described fourth aspect, wherein the filter circuit is made of the single first coil.

### SIXTH ASPECT

The power receiving apparatus according to the above-described fourth aspect, wherein outputs of the resonance circuit have a constant voltage characteristic The filter circuit functions as an immittance filter in a case where the outputs of the resonance circuit are configured to have the constant voltage characteristic.

### SEVENTH ASPECT

The power receiving apparatus according to the above-described fourth aspect, wherein the filter circuit is a band-pass filter.

### EIGHTH ASPECT

The power receiving apparatus according to the above-described fourth aspect, further comprising a first voltage sensor (190) that obtains a voltage at the first auxiliary power supply coil and integrates the voltage at the first auxiliary power supply coil. The control circuit further controls a ratio between a period of the short-circuit mode and a period of the power supply mode in a cycle of the first AC power as a function of a value obtained by integrating the voltage by the first voltage sensor.

### NINTH ASPECT

The power receiving apparatus according to the above-described first aspect, wherein the power receiving circuit further comprises a resonance circuit having a resonance frequency corresponding to a frequency of the first AC power. The resonance circuit comprises the power receiving coil and one or more resonance capacitors (111RC). The first portion includes the one or more resonance capacitors and the power receiving coil.

### TENTH ASPECT

The power receiving apparatus according to the above-described ninth aspect, wherein the auxiliary power supply circuit also includes a second auxiliary power supply coil (161d). The power receiving coil and the second auxiliary power supply coil constitute a second power supply transformer (180d) that supplies the third AC power to the auxiliary power supply circuit.

### ELEVENTH ASPECT

The power receiving apparatus according to any one of the above-described first, second, third, and ninth aspects, wherein the auxiliary power supply circuit further comprises insulating capacitors (161e) connected in series to input terminals of the auxiliary power supply circuit.

### TWELFTH ASPECT

The power receiving apparatus according to any one of the above-described first to tenth aspects, wherein the power conversion circuit further comprises a protection circuit (123) that is configured to short-circuit the inputs of the power conversion circuit. The short-circuit mode is a mode in which the protection circuit short-circuits the inputs of the power conversion circuit.

### THIRTEENTH ASPECT

The power receiving apparatus according to the above-described twelfth aspect, wherein the control circuit issues a command in a form of a pulse signal for causing the protection circuit to execute the power supply mode and the short-circuit mode. The protection circuit performs an operation of the short-circuit mode when the pulse signal is in an ON state and performs an operation of the power supply mode when the pulse signal is in an OFF state. The control circuit further comprises an inverting output unit that inverts the pulse signal.

### FOURTEENTH ASPECT

The power receiving apparatus according to the above-described first aspect, wherein the power receiving apparatus is mounted on a vehicle (V). The vehicle comprises a vehicle controller (20) that controls an operation of the vehicle. The power receiving apparatus further comprises a second voltage sensor that measures a voltage at the auxiliary power supply circuit. The control circuit analyzes an output from the second voltage sensor to execute the short-circuit mode or notify the vehicle controller of information related to an input voltage to the auxiliary power supply circuit when the voltage at the auxiliary power supply circuit is lower than a predetermined reference voltage. The control circuit alternatively executes the power supply mode when the voltage at the auxiliary power supply circuit is higher than the predetermined reference voltage.

## Claims

1. A power receiving apparatus (100, 100a to 100f) that is configured to receive a first AC power (AC1) in a wireless manner through a magnetic field, comprising:
a power receiving circuit (110, 110a, 110b) that includes a power receiving coil (111RL) configured to receive the first AC power;
a power conversion circuit (120, 120f) that works to convert a second AC power (AC2), which is a first part of the first AC power, into a first DC power (DC1);
a load device (130) that consumes the first DC power;
a main power supply circuit (140) that supplies a second DC power (DC2);
an auxiliary power supply circuit (160, 160d, 160f, 160e, 160e1, 160e2) that works to convert a third AC power (AC3), which is a second part of the first AC power, into a third DC power (DC3) and to output the third DC power; and
a control circuit (150, 150c, 150f) that works to control an operation of the power receiving apparatus, the control circuit being supplied with electrical power from the main power supply circuit or the auxiliary power supply circuit, wherein
the power receiving circuit has outputs (110o) connected to inputs (120i) of the power conversion circuit,
the power receiving circuit includes a first portion and a second portion, the first portion being a portion where variations in a current and a voltage are smaller in response to the inputs of the power conversion circuit being short-circuited, the second portion being a portion where variations in a current and a voltage are greater in response to the inputs of the power conversion circuit being short-circuited,
the auxiliary power supply circuit being supplied with the third AC power through the first portion,
the control circuit works to establish a combination of a short-circuit mode and a power supply mode, the short-circuit mode being a mode in which the inputs of the power conversion circuit are short-circuited, the power supply mode being a mode in which the inputs of the power conversion circuit are not short-circuited, and
the control circuit receives the electrical power from the auxiliary power supply circuit when it is impossible for the control circuit to receive the electrical power from the main power supply circuit.

2. The power receiving apparatus according to claim 1, wherein the control circuit executes the short-circuit mode when the control circuit is required to be supplied with the power from the auxiliary power supply circuit.

3. The power receiving device according to claim 2, wherein the power receiving circuit further comprises:
a resonance circuit (110R) having a resonance frequency corresponding to a frequency of the first AC power; and
a filter circuit (110F, 110F1-110F3, 110Fb, 110Fb1) that suppresses a harmonic component of the first AC power;
wherein the resonance circuit comprises the power receiving coil,
wherein, in the filter circuit, at least one of one or more first coils (111FL) and one or more first capacitors (111FC) is connected in series with the power receiving coil and at least one of the inputs of the power conversion circuit, and
wherein the first portion is at least one of the one or more first capacitors and the one or more first coils.

4. The power receiving apparatus according to claim 3, wherein the auxiliary power supply circuit further comprises a first auxiliary power supply coil (161), and further comprising a first power supply transformer (180) that supplies the third AC power to the auxiliary power supply circuit, the first power supply transformer including the first auxiliary power supply coil and one of the one or more first coils which supplies the third AC power to the auxiliary power supply circuit.

5. The power receiving apparatus according to claim 4, wherein the filter circuit is made of the single first coil.

6. The power receiving apparatus according to claim 4, wherein outputs of the resonance circuit have a constant voltage characteristic, and wherein the filter circuit functions as an immittance filter in a case where the outputs of the resonance circuit are configured to have the constant voltage characteristic.

7. The power receiving apparatus according to claim 4, wherein the filter circuit is a band-pass filter.

8. The power receiving apparatus according to claim 4, further comprising: a first voltage sensor (190) that obtains a voltage at the first auxiliary power supply coil and integrates the voltage at the first auxiliary power supply coil, wherein the control circuit further controls a ratio between a period of the short-circuit mode and a period of the power supply mode in a cycle of the first AC power as a function of a value obtained by integrating the voltage by the first voltage sensor.

9. The power receiving apparatus according to claim 1, wherein the power receiving circuit further comprises a resonance circuit having a resonance frequency corresponding to a frequency of the first AC power, wherein the resonance circuit comprises the power receiving coil and one or more resonance capacitors (111RC), and wherein the first portion includes the one or more resonance capacitors and the power receiving coil.

10. The power receiving apparatus according to claim 9, wherein the auxiliary power supply circuit also includes a second auxiliary power supply coil (161d), and wherein the power receiving coil and the second auxiliary power supply coil constitute a second power supply transformer (180d) that supplies the third AC power to the auxiliary power supply circuit.

11. The power receiving apparatus according to any one of claims 1, 2, 3, and 9, wherein the auxiliary power supply circuit further comprises insulating capacitors (161e) connected in series to input terminals of the auxiliary power supply circuit.

12. The power receiving apparatus according to any one of claims 1 to 10, wherein the power conversion circuit further comprises a protection circuit (123) that is configured to short-circuit the inputs of the power conversion circuit, and wherein the short-circuit mode is a mode in which the protection circuit short-circuits the inputs of the power conversion circuit.

13. The power receiving apparatus according to claim 12, wherein the control circuit issues a command in a form of a pulse signal for causing the protection circuit to execute the power supply mode and the short-circuit mode, wherein the protection circuit performs an operation of the short-circuit mode when the pulse signal is in an ON state and performs an operation of the power supply mode when the pulse signal is in an OFF state, and wherein the control circuit further comprises an inverting output unit that inverts the pulse signal.

14. The power receiving apparatus according to claim 1, wherein the power receiving apparatus is mounted on a vehicle (V),
wherein the vehicle comprises a vehicle controller (20) that controls an operation of the vehicle,
wherein the power receiving apparatus further comprises a second voltage sensor that measures a voltage at the auxiliary power supply circuit, and
wherein the control circuit analyzes an output from the second voltage sensor to execute the short-circuit mode or notify the vehicle controller of information related to an input voltage to the auxiliary power supply circuit when the voltage at the auxiliary power supply circuit is lower than a predetermined reference voltage, the control circuit alternatively executing the power supply mode when the voltage at the auxiliary power supply circuit is higher than or equal to the predetermined reference voltage.
